# EUROPEAN PATENT APPLICATION

(11) **EP 0 761 080 A1**
(43) Date of publication of application: **12.03.1997**
(21) Application number: 96202297.6
(22) Date of filing: 16.08.1996
(51) Int. Cl.: A01B 35/08, A01B 39/22

(54) **A hoe holder comprising an element which adjusts itself for height with respect to the ground**

(30) Priority: 30.08.1995 NL 1001092
(71) Applicant: Netagco Holding B.V., 8211 AL Lelystad (NL)
(72) Inventor: Mutsaers, Franciscus Hubertus Johannes, 9625 PC Overschild (NL)
(74) Representative: Louet Feisser, Arnold

(57) **Abstract**

The invention relates to a hoe holder which can be used for interrow tillage with a tillage machine. The hoes (10) mounted therein are thereby moved together with the individual hoe holders at an adjustable depth and in an adjustable working position with respect to the ground surface. The invention provides a device wherein the hoes (10) are attached to an element (1) which adjusts itself with respect to the underlying ground surface by means of two or more supports (4,5) positioned some distance apart, seen in the working direction.

## Description

The present invention relates to a hoe holder, by means of which a hoe mounted therein can be moved in a desired position and with a desired working depth by a tillage machine.

In the case of mechanical crop care with row crops it is usual to apply interrow tillage, whereby the individual tillage elements are moved between the rows of crops. The individual elements are to that end attached to a central tillage beam of a tillage machine. A multitude of strips are tilled by the machine in one go. When carrying out hoeing operations it is important that the hoe works at a substantially constant depth. In many cases hoe elements, or hoe holders, are constructed in such a manner that the working depth of the shoe is not directly determined by the local height adjustment of the tillage beam with respect to the ground.

From literature a large number of devices are known by means of which a hoe can be maintained at a set working depth. In many cases an element in which the hoe is mounted and which is also provided with a supporting wheel is used thereby. The supporting wheel runs on the ground, the constant working depth is obtained by fixing the hoe mounted to the element with respect to the supporting wheel.

Besides the working depth also the inclination of the hoe with respect to the ground determines the proper operation of the hoe. Important is thereby the height adjustment of the hoe or the hoe holder in the working direction. The height adjustment transversely to the working direction falls outside the scope of the present application. From literature devices are known wherein the height adjustment of the individual hoes or hoe holders is made partially dependent on the position of the cross-section of the central tillage beam. From Patent DE 897 496 a device is known wherein the tillage beam C is maintained at a fixed height by ground wheels H. The hoes I can be moved in the vertical plane with respect to beam C by means of a system of rods. By constructing said system of rods in the form of a parallelogram, the hoe assembly will maintain its height adjustment with respect to the ground. This height adjustment is adjusted by means of the tillage beam, using adjusting mechanism D E F G. From Patent NL 66790 a comparable solution is known, wherein a slide construction with a curved guide is used instead of a parallelogram-shaped system of rods. The height adjustment of the hoe with respect to the ground changes with an inward or outward movement of the hoe holder. In all positions, however, including the average working position, the height adjustment is directly determined by the fixed parts 1 and 2 which are connected to the central frame. From Patent EP 90 11 6550 a device is known wherein the height adjustment of the hoe assembly is determined by the position of central tillage beam 6 and the shank 5 secured thereto. In order to prevent overloading the hoes are capable of moving out rearwards when striking obstacles.

The main drawback of a height adjustment which is related to the tillage beam is the fact that additional provisions on the tillage beam or the machine carrying the hoe holders are required, and that moreover all individual hoe holders must be provided with a relatively complex and costly multiple linkage or guide system.

The object of the present invention is to obtain an independent height adjustment of the individual hoe holders. This objective is accomplished by a device wherein the hoes are attached to an element which adjusts itself with respect to the ground surface, which element is supported on the ground surface in at least two points which are spaced apart, seen in the working direction. Said element is moved by the tillage machine, by means of a single arm attached thereto, to which the element is attached in such manner as to be freely rotatable about a horizontal axis extending transversely to the working direction.

The advantage of a device according to the present invention is the simple construction of the hoe holders and the tillage machine. In addition to that it becomes simpler to construct machines which have a large working width. The increased torsion in the tillage beam does not have a direct influence on the height adjustment of the individual hoe holders.

A device according to the present invention may be effected in various manners and with a variation of means. The supports may be in the form of rolling or sliding supports. The supports must have sufficient load bearing capacity, they must not penetrate into the ground too far, but they may have an additional tillage function. They may for example function as crust crushers. The individual supports may be single or multiple supports. It is possible to use two or more supports, but it is also possible to use an infinite number of supports in the form of a skid. In order to provide the self-adjusting element with sufficient stability in the working position, it will be necessary to exert a downward force on the supports. Said downward force may be exerted on the element by means of a single or multiple spring tension. The element may be provided with attachments for hoes in several places. Said attachments may be designed such that it is possible to adjust the working depth and the angle of work with respect to the element. In addition to that it is possible to attach other tillage means to the element or to the arm. It is preferred to position the hoes in such a manner with respect to the supports that the supports are supported on ground which has not been hoed yet. The arm may be attached to the central tillage beam in such manner as to be capable of sliding or pivoting movement, in order to enable a desired variation in height of the beam. The pivoting points used in the construction may be provided with adjustable stops, by means of which a desired position of rest in the raised position of the implement can be set.

The invention will be explained in more detail hereafter by means of a few embodiments.

Figures 1a, 1b and 1b are side views of a few examples of a device according to the invention comprising supports of different construction.

Figures 2a and 2b are side views of examples of a device according to the invention comprising different downward pressures.

Figures 3a, 3b and 3c are plan views of a few examples of a device according to the invention, showing different ways of attaching hoes and other accessories to the element.

Figure 4 shows the use of adjustable stops between parts which can pivot with respect to each other, by means of which stops a desired raised position of rest can be set.

Figures 5a and 5b are a side view and a plan view respectively of a detail of Figures 1 - 4, showing an attachment for hoes by means of which the working depth and the angle of work of the hoes with respect to the element can be adjusted.

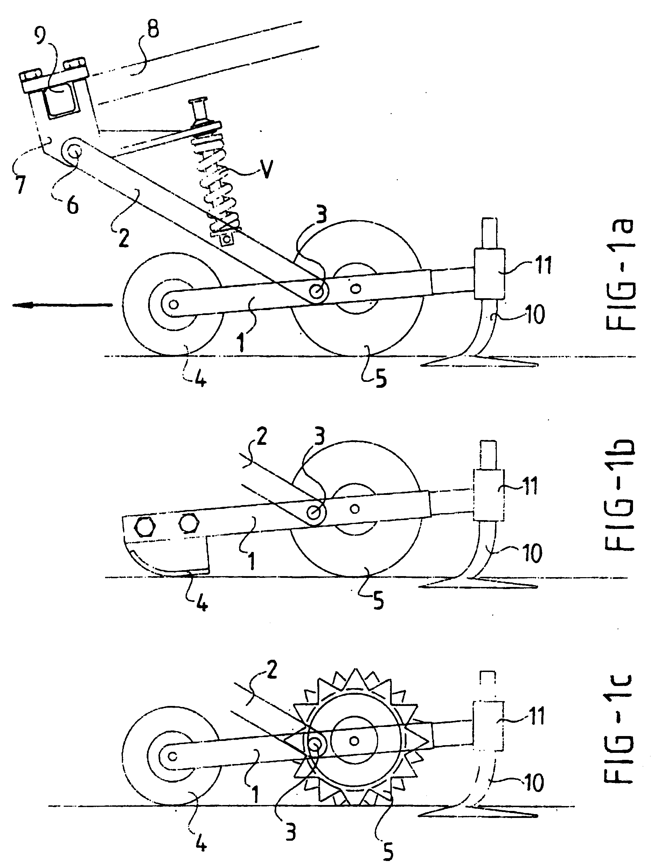

Figure 1a shows an embodiment wherein element 1 is connected to arm 2 in such manner as to be capable of pivoting movement about pivot pin(s) 3. Element 1 is provided with supports 4 and 5 in the form of ground wheels, by means of which it adjusts itself about pin 3 with respect to the underlying ground surface. Hoe 10 does not have a supporting function during use. At the other side arm 2 is attached to clamping piece 7 in such manner as to be capable of pivoting movement about pivot pin 6. Clamping piece 7 may be moved in the longitudinal direction of central tillage beam 9 and be fixed at a desired location. Tillage beam 9 is fixedly connected to tillage machine 8. A downward pressure is exerted on element 1 by compression spring V, which is provided between clamping piece 7 and arm 2. Element 1 is provided with attachment 11 for hoe 10. The working direction of the device is indicated by the arrow. Figures 1b and 1c show comparable constructions, whereby support 4 is in the form of a skid in Figure 1b and support 5 is in the form of a multiple rolling crust crusher in Figure 1c.

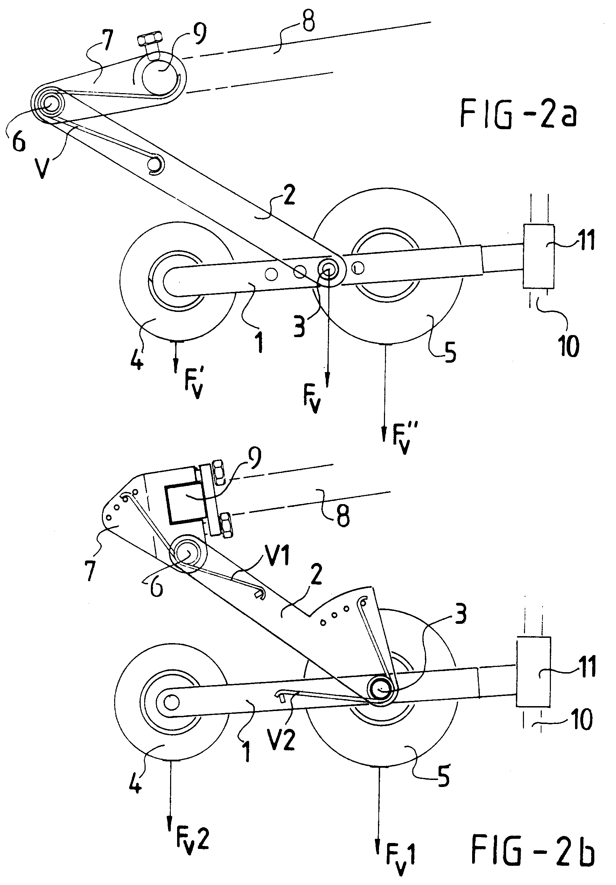

Figures 2a and 2b show two embodiments to which the description of Figure 1a also applies. In order to obtain a proper height adjustment of element 1 a certain downward force must be exerted on the supports that are present. In the device of Figure 2a the pivot point about pin 3 is adjustable along a certain length of element 1 between supports 4 and 5. The respective forces are Fv' and Fv''. The proportion at which the forces are distributed is determined by adjusting the pivot point along element 1. The magnitude of the joint forces Fv may be partially determined by pivoting clamping piece 7 about beam 9. With the device shown in Figure 2b spring VI exerts a downward force Fv1 on support 5 by means of arm 2. Spring V2 exerts a downward force Fv2 on support 4 by means of element 1. The magnitude and proportion of the forces may be determined by adjusting springs V1 and V2.

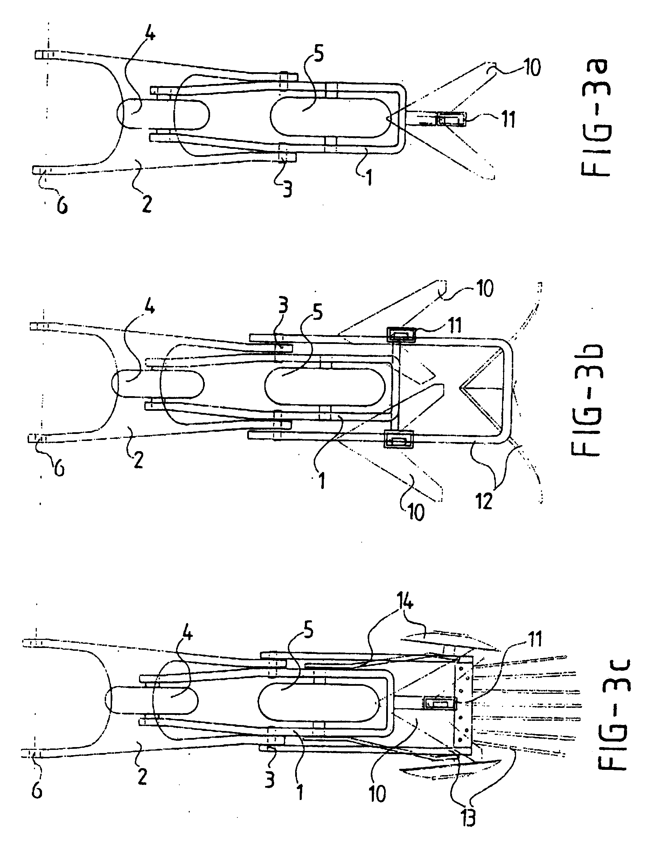

Figures 3a, 3b and 3c are plan views of a few embodiments. The numerals used in these Figures correspond with those used in Figure 1a. Only the central axis of pivot pin 6 is indicated by means of the dotted line in these Figures. As regards the construction Figure 3a corresponds with Figure 1a. In Figure 1b a ridging accessory 12 is added, which is pulled by arm 2 from a common pivoting point (with element 1) about pin 3. In addition to that two hoes are used in Figure 3b. In Figure 3c arm 2 pulls a harrow 13. In addition to that element 1 is provided with disc-shaped foliage protectors 14, which are operative on either side of hoe 10.

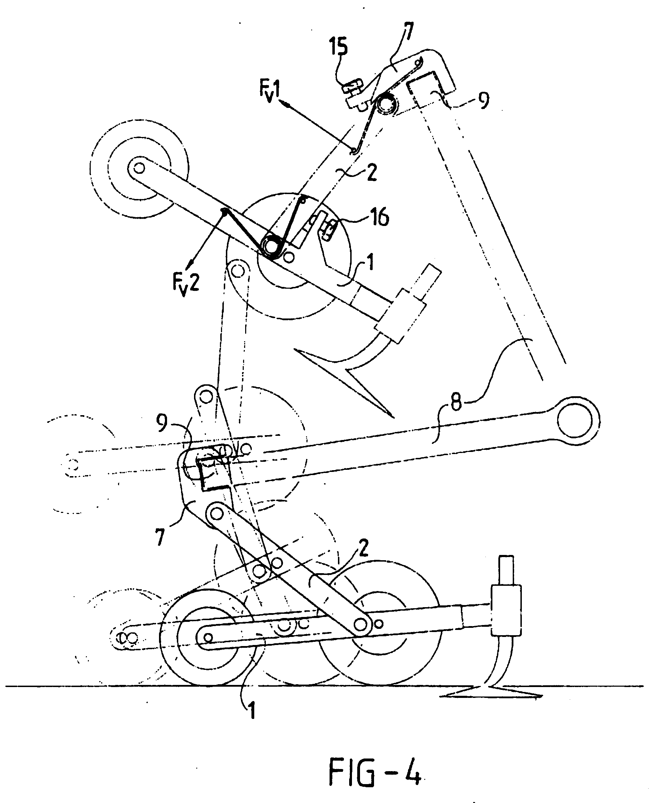

Figure 4 schematically shows in side elevation the positions of above-described parts of the device in the working position, the raised transport position and the intermediate range. The pivoting of the individual parts under the influence of the applied spring tension Fv1 and Fv2 can be limited by means of the adjustable stops 15 and 16. In this manner the device can be lowered for operation and raised in a smooth movement.

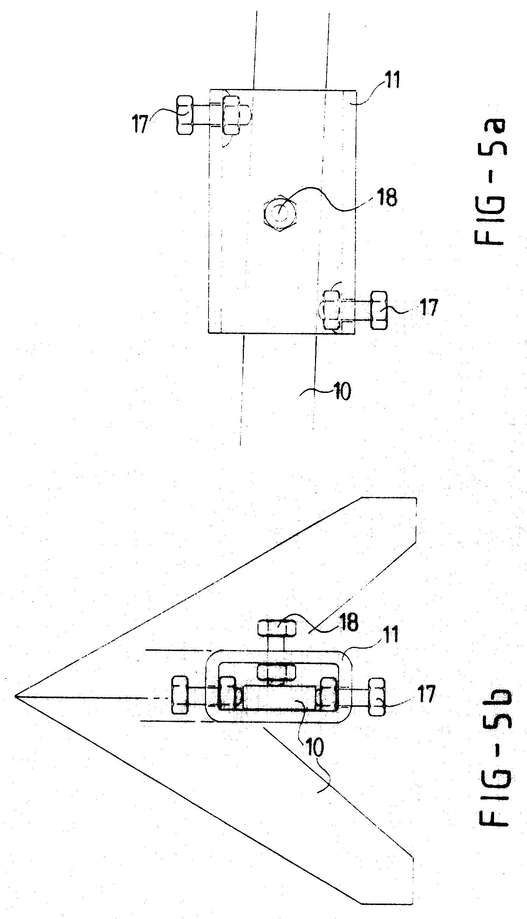

Figures 5a and 5b are detailed views of a possible embodiment of hoe attachment 11. The shank of hoe 10 fits loosely in the housing of attachment 11, which is fixedly connected to the self-adjusting element 1. Turning the set bolts 17 in combination with each other will result in a forward or backward inclination of the hoe. In this manner a working angle with respect to element 1 and the ground surface is determined. Set bolt 18 is used to fix the shank of hoe 10 in vertical direction with respect to the housing. In this manner the working depth of the hoe with respect to element 1 and the ground surface is determined.

Although the invention has been described above by means of preferred embodiments, it is to be understood that numerous modifications may be provided without departing from the scope of the present invention as defined in the claims. Thus it is for example possible to interconnect the individual supports, so that to the eye an elongated supporting body is formed, which in fact consists of an infinite series of supports. The single element 1 shown in the Figures may be built up of several parts, without the operation as described above being changed in an essential manner.

## Claims

1. A hoe holder suitable for being used for interrow tillage with a tillage machine, by means of which at least one hoe mounted therein can be moved at a desired depth and in a desired position with respect to the ground surface, which tillage machine is provided with an arm and with an element which adjusts itself with respect to the ground surface, on which element at least one attachment for a hoe is present, characterized in that said self-adjusting element is provided with at least two supports being positioned one behind the other, seen in the working direction, and engaging the ground surface some distance apart.

2. A hoe holder according to claim 1, characterized in that at least one hoe is mounted on said self-adjusting element, in such a manner that said hoe works behind the rearmost support of said element, seen in the working direction.

3. A hoe holder according to any one of the preceding claims, characterized in that said self-adjusting element is moved by a single arm, to which said element is journalled in such manner as to be capable of pivoting movement about a pivot pin positioned transversely to the working direction, said arm at its other end being connected to the tillage machine.

4. A hoe holder according to claim 3, characterized in that said arm is journalled to said tillage machine, said journalled connection being movable in vertical direction.

5. A hoe holder according to claim 3, characterized in that said arm is journalled to the tillage machine in such manner as to be capable of pivoting movement about a pivot pin positioned transversely to the working direction.

6. A hoe holder according to any one of the preceding claims, characterized in that the arm exerts a downward force on said self-adjusting element at the location where it is journalled to said element.

7. A hoe holder according to claim 6, characterized in that a complementary downward force is exerted on said self-adjusting element.

8. A hoe holder according to any one of the preceding claims, characterized in that the journalled connection between said arm and said self-adjusting element can be moved in the longitudinal direction of the element.

9. A hoe holder according to any one of the preceding claims, characterized in that at least one of the supports of said self-adjusting element on the ground surface is in the form of a sliding support.

10. A hoe holder according to any one of the preceding claims, characterized in that at least one of the supports of said self-adjusting element on the ground surface is in the form of a rolling or sliding tillage element.

11. A hoe holder according to any one of the preceding claims, characterized in that said self-adjusting element is provided with attachments for various tillage elements, protecting plates and other accessories at several locations.

12. An agricultural implement provided with a plurality of hoes arranged in side-by-side relationship, which are capable of tilling the ground simultaneously, characterized in that the working depth and the positions of each individual hoe can be controlled independently, because each hoe is provided with two supports which are provided at a fixed location with respect to each hoe and which can move one behind the other over the ground.

13. An agricultural implement according to claim 12, characterized in that a plurality of hoe holders according to any one of the claims 1 - 11 is provided in side-by-side relationship.

14. A method for hoeing the ground, wherein a plurality of hoe holders are moved through the soil in side-by-side relationship, characterized in that the working depth and the position of each hoe is controlled separately by means of two supports, which move one behind the other over the ground.
